(19) Europäisches Patentamt
European Patent Office
Office européen des brevets

(11) **EP 4 403 457 A1**

(12) **EUROPEAN PATENT APPLICATION**

(43) Date of publication:
**24.07.2024 Bulletin 2024/30**

(21) Application number: **24152795.1**

(22) Date of filing: **19.01.2024**

(51) International Patent Classification (IPC):
**B63B 39/08** (2006.01)   **B63H 5/125** (2006.01)
**B63H 20/08** (2006.01)   **G01S 13/60** (2006.01)

(52) Cooperative Patent Classification (CPC):
**B63H 5/08; B63B 1/28; B63B 1/285; B63B 39/06;
B63H 5/1252; B63H 20/10;** B63H 2005/1256;
B63H 2020/005; G01S 13/605

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.01.2023 EP 23152670
15.12.2023 SE 2351439**

(71) Applicant: **Volvo Penta Corporation
405 08 Göteborg (SE)**

(72) Inventors:
• **RYDSTRÖM, Mats
427 39 Billdal (SE)**
• **WESSMAN, Björn
423 41 Torslanda (SE)**
• **KÖHLBERG, Dennis
416 58 Göteborg (SE)**
• **TUULIAINEN, Peter
731 41 Köping (SE)**

(74) Representative: **Zacco Sweden AB
P.O. Box 5581
Löjtnantsgatan 21
114 85 Stockholm (SE)**

(54) **MARINE VESSEL MOTION ESTIMATION AND STABILIZATION**

(57)   A marine vessel (100, 200, 500) comprising a hull (110), a propulsion system (120), a control unit (130) and a motion sensor system (140),
where the propulsion system (120) comprises a first drive unit (120a) and a second drive unit (120b) separated by a longitudinal midship line (115) of the hull (110), where each drive unit (120a, 120b) is arranged to generate thrust ($T$) in a controllable thrust elevation angle ($\omega_{y,T}$) and in a controllable thrust azimuth angle ($\omega_{z,T}$), where at least the thrust elevation angles ($\omega_{y,T}$) are individually controllable,
where the control unit (130) is arranged to estimate a pitch motion ($\omega_y$) and a roll motion ($\omega_x$) of the hull (110) based on input from the motion sensor system (140), and where the control unit (130) is arranged to suppress pitch motion and roll motion by the hull (110) by controlling the thrust elevation angles ($\omega_{y,T}$) and the thrust azimuth angles ($\omega_{z,T}$) of the first and second drive units (120a, 120b).

FIG. 1A

EP 4 403 457 A1

## Description

### TECHNICAL FIELD

The disclosure relates generally to motion estimation and to motion control of marine vessels. In particular aspects, the disclosure relates to marine vessel motion estimation and active stabilization systems for marine vessels. The different techniques of the disclosure can be applied to marine leisure craft such as daycruisers and other powerboats, and also to smaller commercial crafts such as ferries, supply ships, and the like.

Although the disclosure may be described with respect to a particular vessel, the disclosure is not restricted to any particular vessel.

### BACKGROUND

A marine vessel is subject to forces from the sea, such as waves that act on the hull of the vessel. These forces may cause both pitch motion and roll motion, which may be undesired. Porpoising, for instance, is a sustained, repetitive motion that causes a boat's bow to bounce up and down out of the water, even in calm waters. While porpoising can be merely uncomfortable for passengers, it can also cause loss of control, which may result in injury or damage to the structure of the boat.

Hydrofoiling is becoming more and more popular in powerboats and smaller commercial marine vessels. Hydrofoiling operation at high speeds increases the requirements on stability placed on the marine vessel.

Active stabilizer systems based on gyroscopes are known. These systems can be used to mitigate both roll motion and pitch motion by the hull of a boat.

Active stabilizer systems based on fins, trim plates, and so-called interceptors, are also known. These systems can also be used to mitigate pitch and roll motion by the hull of a boat.

However, despite the many active stabilization systems available today, there is a need for further improvements to mitigate pitch and roll motion by a marine vessel in an efficient manner.

There is also a need for improvements in motion estimation techniques and motion prediction techniques suitable for marine vessels.

### SUMMARY

Aspects of the present disclosure relate to a marine vessel comprising a hull, a propulsion system, a control unit, and a motion sensor system. The propulsion system comprises at least a first drive unit and a second drive unit that are separated by a longitudinal midship line of the hull, i.e., they are arranged on respective sides of the vessel. Each drive unit is arranged to generate thrust in a controllable thrust elevation angle and in a controllable thrust azimuth angle, where at least the thrust elevation angles of the drive units are individually controllable, meaning that different thrust elevation angles can be configured on the different drive units. The control unit on the marine vessel is arranged to estimate a current pitch motion and a current roll motion of the hull of the vessel based on input from the motion sensor system. The control unit is also arranged to suppress undesired pitch motion and undesired roll motion by the hull by controlling the thrust elevation angles and possibly also the thrust azimuth angles of the first and second drive units.

The technique can be used with advantage under-way, i.e., as the boat travels in a forward direction, possibly at high speed. The technique is also applicable when the vessel is stationary, such as when the boat is at anchor.

This way efficient pitch and roll mitigation is provided by the propulsion system, which is an advantage since the need for additional active stabilization systems such as gyros and active fins is reduced. The active stabilization is provided by coordination of the drive units on the vessel, which is an advantage since this coordination can be performed with energy efficiency or other secondary performance criteria as target, as will be explained in more detail below.

The hull has a center of gravity, and the pitch motion, and the roll motion of the hull can advantageously be defined in relation to this center of gravity. A center of buoyancy of the vessel can also be used as reference. By defining hull motion relative to the center of gravity or center of buoyancy, stability calculations may be simplified. Control of a foiling operation involving, e.g., front, and rear hydrofoil arrangements may for instance be simplified if the vessel motion is defined relative to the center of gravity of the vessel, or at least relative to an approximate center of gravity of the vessel.

The first drive unit and the second drive unit can be mounted on a transom of the hull or on a bottom of the hull, i.e., extending downwards into the water from the bottom of the hull. It is also possible to use drive units on the transom in combination with drive units extending out from the bottom of the hull. An advantage of using a drive unit that extends out from the bottom of the hull is that it can be efficiently combined with a hydrofoiling arrangement, such as a hydrofoiling wing. An example of such as propulsion system will be described below.

According to some aspects, the first drive unit and the second drive unit comprise respective trim actuators. Each trim actuator is arranged to control thrust elevation angle of its drive unit independently of the thrust elevation angle of the other drive unit, in response to a control signal from the control unit. Using separate trim actuators in this manner is an advantage since it allows the drive unit trim of one drive unit to be adjusted independently of the other drive unit. The trim of more than two drive units can of course also be adjusted in this manner. Having the possibility to adjust trim separately on two or more drive units allows for efficient roll compensation.

Some of the trim actuators disclosed herein allow the thrust elevation angle to be adjusted over a range exceeding 180 degrees, meaning that the thrust direction can be reversed by adjusting the trim angle by 180 degrees or more.

The trim actuators may comprise hydraulic actuators, electric machines such as servos, or a combination of hydraulic and electric trim actuators. Electric machine trim actuators are often faster, i.e., more responsive, compared to hydraulic trim actuators, and can thus be controlled at higher control loop bandwidths. This means that they react faster to a control command from the control unit, and also change trim angle at a higher rate. According to some aspects, the vessels discussed herein use a combination of hydraulic actuators and electric machines to control trim of the drive units on the marine vessel. The faster electric machine trim is then overlaid on the slower hydraulic trim to obtain a faster overall response to control commands sent from the control unit. The hydraulic trim actuator provides a larger angular range for the trim but can be designed to be slower since responsiveness is provided by the electric trim actuator. This configuration is akin to a brake blending operation on a road vehicle which uses both friction brakes and electric machines for retardation, where the friction brake is slower compared to the electric machine when it comes to adjusting brake torque.

The control unit can be arranged to suppress a roll motion of the hull by controlling the thrust elevation angles of the drive units in different directions, i.e., positive, and negative trim angles relative to the horizontal plane or to some other reference angle, to induce a counter roll motion by the hull. The control unit can also be arranged to suppress a pitch motion by the hull by controlling the thrust elevation angles of the drive units in the same direction (both positive or both negative) to induce a counter pitch motion by the hull. However, as will be discussed in more detail below, the actuation of the drive units in terms of thrust angle (in both elevation and azimuth) and thrust magnitude is preferably coordinated by the control unit having some secondary performance criteria in mind also, such as energy efficiency, noise level, or component wear. The same vessel maneuver can often be accomplished in many different way, i.e., by using steering, changes in thrust, or changes in trim of the drive units. A solution to accomplish a given maneuver can often be found which is, e.g., more energy than other solutions, or which generates a more comfortable ride for the passengers on the vessel, as will be explained in the following.

The motion sensor system on the vessel preferably comprises an inertial measurement unit (IMU), arranged to measure rotation of the hull about a longitudinal reference axis (roll motion) and about a lateral reference axis (pitch motion). The IMU is preferably a six-axis IMU which comprises both a gyroscope and an accelerometer. An advantage associated with using an IMU is that its output is obtained with relatively low latency, which is an advantage in control applications such as discussed herein, where undesired motion by the vessel is preferably mitigated with as low latency as possible.

The motion sensor system preferably also comprises at least one radar transceiver arranged to transmit a radar signal in a boresight direction pointing at the sea surface, preferably at a non-zero angle relative to a normal of the sea surface. A radar transceiver arranged pointing at the sea surface can be used to measure the heave of the hull of the marine vessel, i.e., the distance between some reference point on the hull and the sea surface. A radar transceiver control unit can also be arranged to determine speed of the hull relative to the water surface based on a Doppler shift in radar backscatter from the sea surface in case the boresight direction is pointing at the sea surface at a non-zero angle relative to a normal of the sea surface. This type of speed sensor radar is known in land-based vehicles, where it has been used with advantage to estimate both longitudinal speed and lateral speed by road vehicles such as trucks, trains, and passenger cars. By mounting a similar radar system on a marine vessel valuable information about the speed of the vessel relative to the sea surface can be obtained. The obtained speed data can be obtained as a three-dimensional speed vector, i.e., longitudinal, lateral, and vertical speed components.

The marine vessel may comprise a plurality of radar transceivers arranged to transmit respective radar signals in respective boresight directions pointing at the sea surface. One or more radar transceiver control units can then be arranged to determine at least speed of the hull relative to the water surface based on radar backscatter from the sea surface. By using more than one radar transceiver in this manner the speed estimation becomes more reliable. It also becomes possible to estimate speed in more than one dimension.

A radar transceiver can also be arranged to determine a distance from the radar transceiver to the sea surface and the control unit can be arranged to estimate pitch motion and/or roll motion of the hull based on the determined distance to the sea surface. Having information about the distance from a couple of locations on the hull to the sea surface and knowing the bore-sight angles of the different radar transceiver, it becomes possible to accurately determine a current pitch angle and a current roll angle of the hull relative to the sea surface. This information can be used to improve motion control of the vessel.

According to some aspects, the radar transceiver control unit is arranged to determine a speed and/or acceleration of the hull relative to the sea surface based on one or more radar signals. At least one IMU is at the same time arranged to determine an acceleration of the hull in an inertial reference frame, i.e., relative to gravity. The control unit on the vessel can then be configured to determine an Euler angle of the hull based on the speed and/or acceleration of the hull relative to the sea surface in comparison with the acceleration of the hull in the inertial reference frame. This way the pitch and/or roll angle of the vessel can be determined in a reliable and efficient manner, which is an advantage.

According to some aspects, the marine vessel comprises a hydrofoiling system. The control unit can then be arranged to suppress pitch motion and roll motion by the hull by controlling the foiling system in combination with the thrust elevation angles and the thrust azimuth angles of the first and second drive units. The coordination of the hydrofoiling arrangement and the drive units to obtain a desired motion by the vessel can result in, e.g., a more energy efficient operation, less noise, and less component wear, depending on the objective function of the coordination function. The foiling system may, e.g., comprise a front hydrofoil arrangement and a rear hydrofoil arrangement and the control unit can be arranged to control a heave of the hull based on control of the front hydrofoil arrangement and to control pitch and/or roll of the hull based on control of the rear hydrofoil arrangement.

Aspects of the disclosure also relate to a marine vessel comprising a hull, a control unit, a hydrofoiling arrangement, and a motion sensor system, where the motion sensor system comprises a radar transceiver control unit and at least one radar transceiver arranged to transmit a radar signal in a boresight direction pointing at the sea surface. The radar transceiver control unit is arranged to determine at least a current heave of the hull relative to the water surface based on radar backscatter from the sea surface, and the control unit is arranged to control the hydrofoiling arrangement to reduce a difference between the current heave of the hull and a desired heave of the hull, i.e., a heave set-point of the vessel. Using a radar system in this manner to determine heave, and to control a hydrofoiling arrangement based on current heave in relation to a heave set-point results in reliable and efficient operation. The control of the hydrofoiling arrangement can be performed in an accurate manner with low latency and high control loop bandwidth, which is an advantage especially in more difficult operating conditions, such as sea conditions with high waves and strong winds.

According to some aspects, the foiling system comprises a front hydrofoil arrangement and a rear hydrofoil arrangement, and the control unit is arranged to control the heave of the hull based on control of the front hydrofoil arrangement. The control unit is preferably also arranged to control pitch and/or roll of the hull based on control of the rear hydrofoil arrangement. This division between the front and rear hydrofoiling arrangements results in a more stable and easily controlled operation. The front hydrofoil arrangement is primarily controlled using the heave data obtained from the radar while the rear hydrofoiling arrangement can be controlled using data from both the radar and from one or more IMUs on the vessel.

According to some aspects, the at least one radar transceiver is arranged to transmit the radar signal in a boresight direction pointing at the sea surface at a non-zero angle relative to a normal of the sea surface, and the radar transceiver control unit is arranged to determine a speed of the hull relative to the water surface based on a Doppler shift of radar backscatter from the sea surface, and also to control the foiling arrangement based on the speed of the hull. The lift force of a hydrofoiling arrangement generally depends on the speed of the hydrofoil wing through the water. Hence, having access to accurate information about the speed of the vessel through the water is beneficial when determining the response by the hull to a given control command.

The marine vessel may comprise a plurality of radar transceivers arranged to transmit respective radar signals in respective boresight directions pointing at the sea surface. The radar transceiver control unit can then be arranged to determine the speed of the hull relative to the water surface in at least two directions based on radar backscatter from the sea surface. Thus, not only longitudinal speed of the hull through the water is determined by the radar system but also lateral speed of the hull relative to the sea surface, and possibly also vertical speed of the hull relative to the sea surface. This is an advantage since more advanced control operations can be performed by also exploiting the information on lateral speed of the hull relative to the sea surface. The control of the hydrofoil arrangement can, for instance, be refined using information on lateral speed, since the lateral speed of the water passing a hydrofoil wing also has an impact on the forces generated by the hydrofoil wing on the hull of the vessel.

The marine vessel may also comprise at least one radar transceiver arranged to transmit a respective radar signal in a boresight direction pointing at the sea surface and the control unit can be arranged to estimate a pitch motion and/or a roll motion of the hull based on the determined distance to the sea surface. By measuring distances from a plurality of locations on the hull to the sea surface is becomes possible to accurately determine the pose of the hull relative to the sea surface, such as its pitch angle and roll angle relative to the sea surface. This pose information can be used to refine the motion control of the vessel, such as the different attack angles of the hydrofoiling wings.

According to some aspects, a radar transceiver control unit on the vessel is arranged to determine a speed and/or acceleration of the hull relative to the sea surface based on one or more radar signals. At least one IMU is at the same time arranged to determine an acceleration of the hull in an inertial reference frame. The control unit can then be configured to determine an Euler angle of the hull based on the speed and/or acceleration of the hull relative to the sea surface in comparison with the acceleration of the hull in the inertial reference frame. This way the pitch angle and/or roll angle of the hull can be determined in a reliable manner. The Euler angles determined in this manner can also be used to improve the motion control of the vessel.

The marine vessel may also comprise a propulsion system with at least a first drive unit and a second drive unit that are separated by a longitudinal midship line of the hull, i.e., that are arranged on respective sides of the vessel. Each drive unit is arranged to generate thrust in a controllable thrust elevation angle and in a controllable thrust azimuth angle, where at least the thrust elevation angles are individually controllable, meaning that different thrust elevation angles can be configured on the different drive units. The control unit is arranged to estimate a current pitch motion and a current roll motion of the hull based on input from the motion sensor system. The control unit is also arranged to suppress pitch motion and roll motion by the hull by controlling the thrust elevation angles and the thrust azimuth angles of the first and second drive units.

This way efficient pitch and roll mitigation is provided by the propulsion system, which is an advantage since the need for additional active stabilization systems such as gyros and fins is reduced. The active stabilization is effectively provided by coordination of the drive units on the vessel, which is an advantage since this coordination can be performed with energy efficiency as a target, or other optimization criteria such as noise level, component wear, and so on.

The hull has a center of gravity and the pitch motion, and the roll motion of the hull can advantageously be defined in relation to this center of gravity, at least approximately. The center of buoyancy of the vessel may also be used as reference with a similar technical effect. By defining hull motion relative to the center of gravity, stability calculations may be simplified. Control of a foiling operation involving, e.g., front, and rear hydrofoil arrangements may also be facilitated if the vessel motion is defined relative to the center of gravity of the vessel, or at least relative to an approximate center of gravity of the vessel. It is, however, appreciated that other reference points on the vessel hull can be used to define pitch and roll motion.

The first drive unit and the second drive unit can be mounted on a transom of the hull or extending out into the water from a bottom of the hull. It is also possible to use drive units on the transom in combination with drive units extending out from the bottom of the hull. An advantage of using a drive unit that extends out from a bottom of the hull is that it can be efficiently combined with a hydrofoiling arrangement.

According to some aspects, the first drive unit and the second drive unit comprise respective trim actuators. Each trim actuator is arranged to control thrust elevation angle of its drive unit independently of the thrust elevation angle of the other drive unit, in response to a control signal from the control unit. Using separate trim actuators is an advantage since it allows the drive unit trim of one drive unit to be adjusted independently of the other drive unit. The trim of more than two drive units can of course also be adjusted in this manner.

The trim actuators may comprise hydraulic actuators, electric machines such as servos, or a combination of the two. Electric machine trim actuators are often faster, i.e., more responsive, compared to hydraulic trim actuators. According to some aspects, the vessels discussed herein use a combination of hydraulic actuators and electric machines to control trim. The hydraulic trim actuator provides a larger angular range for the trim but can be designed to be slower than the electric machine. The faster electric machine trim is then overlaid on the slower hydraulic trim to obtain a faster response to control commands sent from the control unit over a wider range of configurable trim angles.

The control unit can be arranged to suppress a roll motion by the hull by controlling the thrust elevation angles of the drive units in different directions, i.e., positive and negative trim relative to some reference plane such as the horizontal plane, to induce a counter roll motion by the hull. The control unit can also be arranged to suppress a pitch motion by the hull by controlling the thrust elevation angles of the drive units in the same direction (both positive trim angles or both negative trim angles) to induce a counter pitch motion by the hull. However, as will be discussed in more detail below, the actuation of the drive units in terms of thrust angle (in both elevation and azimuth) and thrust magnitude is preferably coordinated by the control unit having some secondary performance criteria in mid also, such as energy efficiency, noise level, or component wear. The same maneuver can often be accomplished in many different way, i.e., by using steering, changes in thrust, or changes in trim. A solution to accomplish a given maneuver can often be found which is, e.g., more energy than other solutions, or which generates a more comfortable ride for the passengers on the vessel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

Figures 1A-C shows an example marine vessel with a propulsion system.
Figure 2 illustrates a marine vessel with a radar transceiver for motion estimation.

Figure 3 schematically shows a vessel with a plurality of radar transceivers.
Figure 4 schematically shows a vessel control system.
Figure 5 illustrates an example marine vessel with a foiling arrangement.
Figure 6 schematically shows a vessel control system.
Figure 7 illustrates an example marine propulsion system.
Figure 8 schematically illustrates an example computer system.
Figure 9 shows an example vessel motion control architecture.
Figures 10A-B are flow charts that illustrate example methods.
Figure 11 illustrates hull pose estimation using radar distance measurements.
Figure 12 illustrates combined electric and hydraulic trim actuation.
Figure 13 shows an example vessel with a radar comprising an antenna array.
Figure 14 is a schematic illustration of an example computer system.

**DETAILED DESCRIPTION**

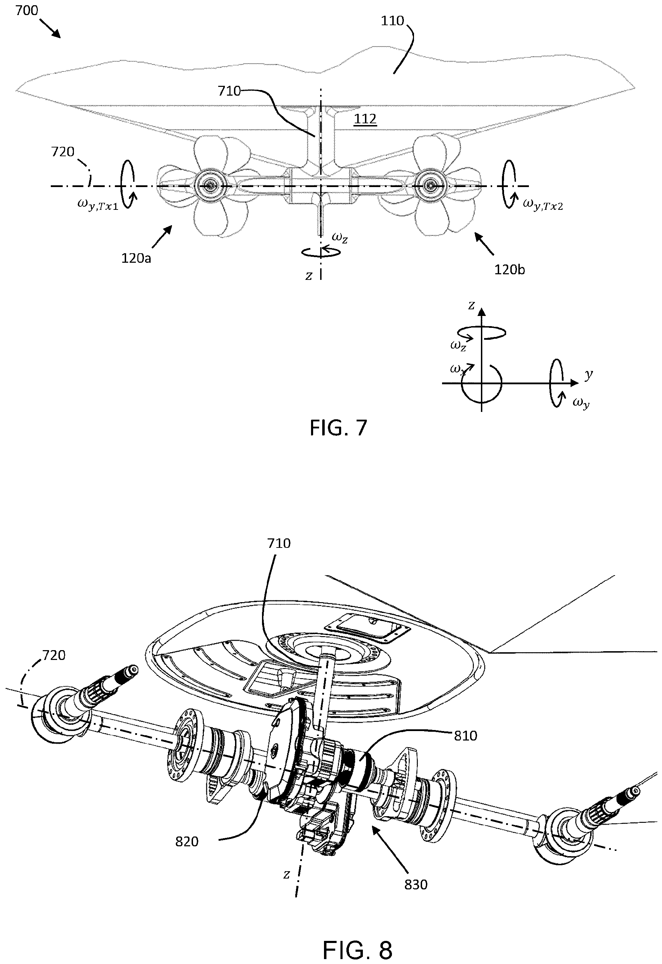

The detailed description set forth below provides information and examples of the disclosed technology with sufficient detail to enable those skilled in the art to practice the disclosure.

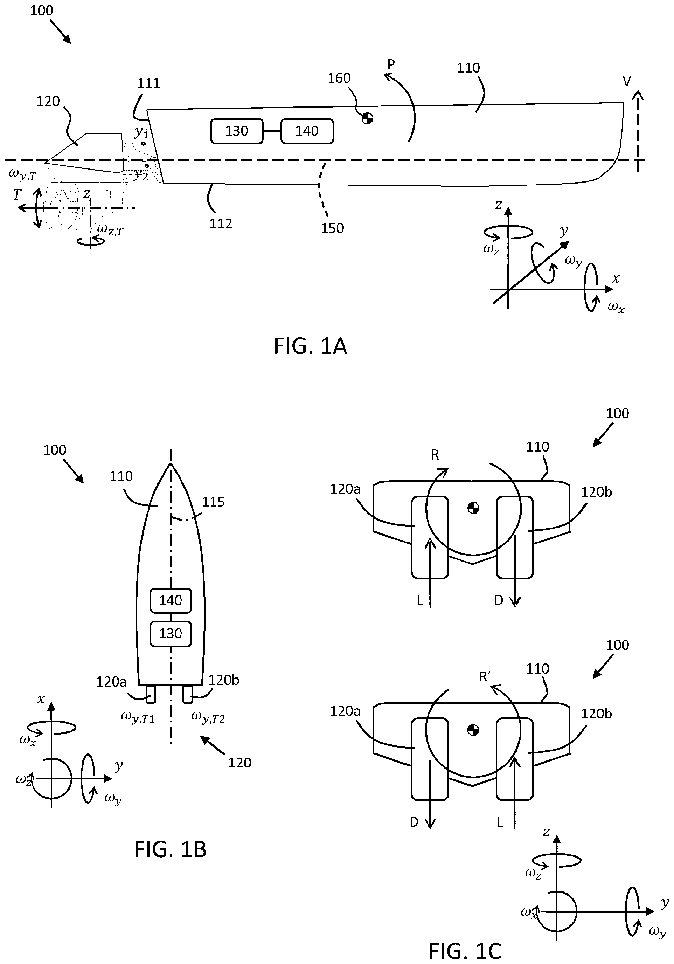

Figures 1A-C, 2, 3, and 5 illustrate example marine vessels 100, 200, 500. The general teachings herein will be exemplified using these vessels. It is, however, appreciated that the teachings are more generally applicable, i.e., that the teachings herein can be applied to various types of marine vessels, including vessels with more than one hull.
The vessels 100, 200, 500 all comprise a center of gravity 160. A center of buoyancy can also be used as reference. The hull 110 of the vessels extend in a longitudinal direction and normally has some form of longitudinal midship line 115. The front of the vessel is referred to as the fore or bow of the vessel 100 while the rear of the vessel is referred to as the stern or aft. Some vessels comprise a transom 111, which is the aft transverse surface of the hull that forms the stern of a vessel. The hull 110 has a bottom surface 112, which may vary widely in shape between vessels.
Some of the propulsion systems 120 discussed herein are mounted to the transom 111 of the hull 110, while other propulsion systems extend out from the bottom 112 of the hull 110. An example propulsion system that extends out from the bottom of the hull is illustrated in Figures 7-8. The propulsion systems will be discussed in more detail below.
Directions and rotations are defined in a coordinate system comprising x, y, z axes as illustrated in the drawings, and rotations about these axes will be denoted $\omega_x$, $\omega_y$, $\omega_z$. The x-axis is generally aligned with the longitudinal midship line 115 of the vessel, while the y-axis extends laterally with respect to the longitudinal direction of the vessel. The z-axis extends vertically in a direction V normal to a calm sea surface 150, as illustrated in the drawings. Accelerations along the x, y, z axes will be denoted $a_x$, $a_y$, $a_z$ and velocities along the x, y, z axes will be denoted $v_x$, $v_y$, $v_z$.
Generally, herein, a time derivative will be denoted by a dot, i.e.,

$$a_x = \frac{d}{dt} v_x(t) = \dot{v}_x$$

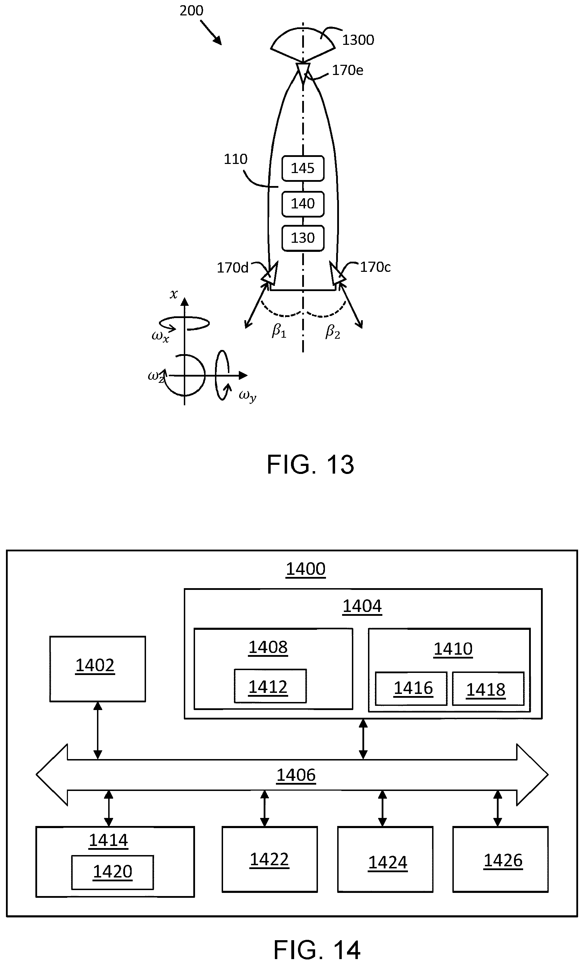

At least some of the propulsion systems discussed herein comprise drive units that are able to generate thrust T in a variable thrust angle, and with a variable thrust magnitude. In the example of Figure 1, the thrust elevation angle is denoted $\omega_{y,T}$ and the thrust azimuth angle is denoted $\omega_{z,T}$. The drive unit in the example of Figure 1A is rotatable about a first trim axle $y_1$ and about a second trim axle $y_2$. By controlling rotation about these axes $y_1$, $y_2$ the elevation angle of the thrust can be controlled by the control unit 130 in an efficient manner.
The thrust elevation angle $\omega_{y,T}$ of a drive unit if sometimes referred to as the trim angle of the drive unit or simply the trim of the drive unit. Generally, trim may also refer to the average pitch angle of the hull as it travels through the water.
Rotation about axis $y_2$ can be used with advantage to control trim angle of the drive unit, i.e., the elevation angle of the propeller thrust vector T. Rotation about axis $y_1$ can be used to lift the drive unit out of the water, to avoid biofouling. Rotation about axis $y_1$ can also be used to reduce draught of the drive unit.
The different vessels 100, 200, 500 discussed herein comprise a control unit 130. This control unit can be a centralized control unit where processing takes place on processing circuitry located in the same place on the vessel, or a distributed control unit which comprises several spatially separated units of processing circuitry. An example computer system 1400 will be discussed in more detail below in connection to Figure 14.
The control unit 130 is connected to a motion sensor system 140 which is only schematically illustrated in Figure 1A. This motion sensor system may comprise one or more sensors, possibly of different type. The purpose of the motion sensor system 140 is to sense motion of the hull 110 relative to some reference coordinate system. The motion sensor system may comprise, e.g., one or more inertial measurement units (IMU), one or more speed logs, one or more global positioning system (GPS) receivers, one or more radar transceivers, and possibly also a foiling wand arrangement. These different sensor types will all be discussed in more detail below.

It has been realized that it is possible to design a drive unit trim system which allows the thrust elevation angles $\omega_{y,T1}$, $\omega_{y,T2}$ of two or more drive units 120a, 120b in the propulsion system 120 to be adjusted independently from each other and rapidly enough to generate a roll motion R by the hull 110 that counteracts the roll motion caused by the sea. Referring to Figures 1B-C, a roll motion R can be induced by controlling the thrust elevation angles $\omega_{y,T1}$, $\omega_{y,T2}$ of two or more drive units 120a, 120b in opposite directions, such that the boat stern is lifted L at one side of the hull by one drive unit and pushed down D at the other side of the hull, thus causing a rotation R about the x-axis. To be controlled in opposite directions means that the difference in thrust elevation angles increases. For instance, one thrust elevation angle may be controlled to be positive relative to a horizontal plane while the other thrust elevation angle is controlled to be negative relative to the horizontal plane. Generally, by controlling the thrust elevation angles $\omega_{y,T1}$, $\omega_{y,T2}$ of two or more drive units 120a, 120b in opposite directions, a roll motion effect is obtained, i.e., an increase or decrease in roll angle by the vessel 100.

A rotation R' in the counterclockwise direction can also be obtained, as illustrated in Figure 1C, by controlling the thrust elevation angles in opposite directions.

The drive units 120a, 120b may comprise electric machines. Electric machines have the property that the axle speed and the axle torque can be changed quickly, much more so than conventional combustion engine driven propulsion units. This allows the control unit 130 to adjust thrust with high bandwidth, i.e., change thrust fast from one magnitude to another magnitude, in order to control the motion of the vessel.

It is also possible to mitigate pitch motion by the hull 110 about the y-axis by adjusting the trim angle of the drive units 120a, 120b in the same direction, i.e., both upwards or both downwards in trim angle induce a pitch motion by the hull 110. Generally, by controlling the thrust elevation angles $\omega_{y,T1}$, $\omega_{y,T2}$ of two or more drive units 120a, 120b in the same direction, a pitch motion effect is obtained, i.e., an increase or decrease in pitch angle of the vessel 100.

The effects of a given thrust elevation angle setting on two or more drive units on a marine vessel can be investigated by practical experimentation, tabulated, and then used for vessel motion control by the control unit 130. The effects of a given thrust elevation angle setting on two or more drive units on a marine vessel can also be investigated by computer simulation, tabulated, and then used for vessel motion control by the control unit 130, e.g., to mitigate an undesired roll motion by inducing a counter-roll motion.

The same principles apply if there are more than two drive units mounted on the hull 110, e.g., three or more transom mounted drive units. Generally, each drive unit provides a thrust vector $T$ having a given magnitude $|T|$ and a given direction $\arg(T)$ in three dimensions. Each such thrust vector generates a propulsion or braking force having a certain direction. The effect of this thrust vector on the motion by the hull 110 can be determined based on the position of the drive unit and properties of the hull, such as its center of gravity. A dynamic model of the vessel can, for instance, be configured in the control unit 130 and used to predict an impact of a given thrust vector configuration. The control unit can thus control the trim and steering of each drive unit to obtain a desired motion by the hull, such as a given speed and a given steering curvature. Overlaid onto this desired speed and curvature are the pitch and roll compensation.

To summarize at least part of the discussions herein, there is presented a marine vessel 100, 200, 500 comprising a hull 110, a propulsion system 120, a control unit 130 and a motion sensor system 140. The hull 110 in the illustrated examples has a center of gravity 160, which can be used as a reference for the pitch motion $\omega_y$ and the roll motion $\omega_x$ of the hull 110. Other references can also be used, such as a pre-determined center location of the hull 110, or a center of buoyancy. The roll motion $\omega_x$ of the hull can also be defined relative to a longitudinal midship line 115 of the hull.

The propulsion system 120 comprises a first drive unit 120a and a second drive unit 120b separated by a longitudinal midship line 115 of the hull 110, where each drive unit 120a, 120b is arranged to generate thrust $T$ in a controllable thrust elevation angle $\omega_{y,T}$ and in a controllable thrust azimuth angle $\omega_{z,T}$.

The drive units comprised in the propulsion system 120 are independent from each other, meaning that both the thrust magnitude and the thrust direction can be controlled individually by the control unit. The control unit 130 having a certain target motion to be obtained by the hull 110 may use both thrust angle and thrust magnitude to obtain this desired motion. With reference to the example in Figure 1C, suppose for instance that it is desired to reduce the pitch angle $\omega_y$ of the hull 110 and at the same time induce a rotation $\omega_x$, R in the clockwise direction as seen along the x-axis. Suppose also that the port drive unit 120a is configured with a positive trim angle that lifts L the stern out of the water and that the starboard drive unit 120b is configured with a negative trim angle that pushes D the stern down into the water. The control unit 130, having regard to the current trim configuration, may simply adjust the thrust magnitude of one or both drive units to obtain both a roll motion and a pitch motion by the hull 110. The effect to be expected from such a change in setting on the drive units can be obtained from a dynamic model of the vessel. Several such dynamics vessel models are known in the art, and dynamic models of marine vessels will therefore not be discussed in more detail herein.

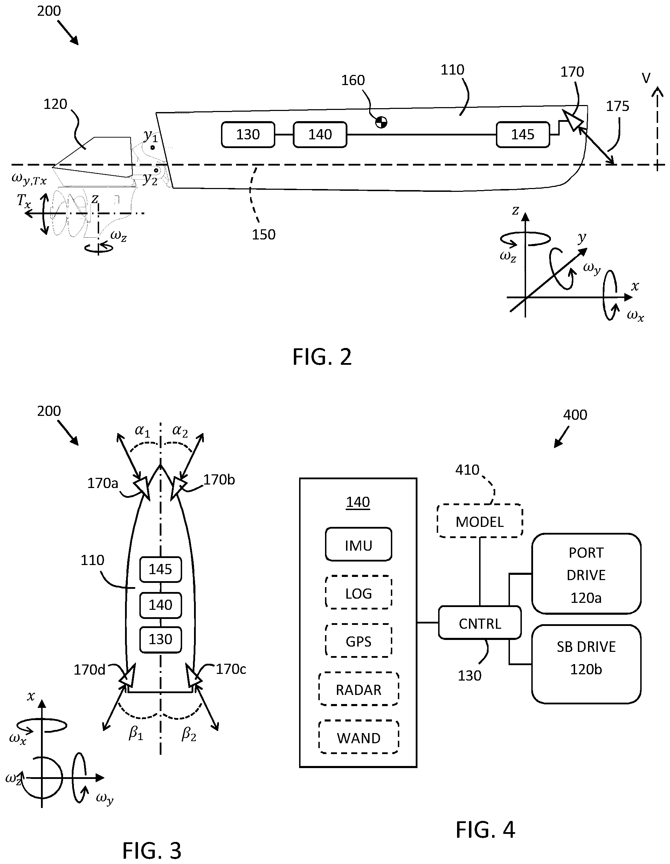

The first drive unit 120a and the second drive unit 120b can be mounted on a transom 111 of the hull 110 as illustrated in Figures 1A-C and in Figure 2, or on a bottom 112 of the hull 110 as exemplified in Figures 7-8.

In the example 700 of Figure 7, the two drive units 120a, 120b are supported on a center member 710 which is rotatable $\omega_z$ in the horizontal plane. The azimuth angle of the thrusts of the first and second drive units 120a, 120b is here the same, although in some designs the drive units may be rotated 180 degrees about the transversal axis 720 to face in opposite directions. The thrust elevation angles $\omega_{y,Tx1}$, $\omega_{y,Tx2}$ are individually controllable by the control unit 130, which means that the propulsion system can be used to control both pitch motion and roll motion by the hull 110. Figure 8 shows an example implementation of the transmission inside the propulsion system in Figure 7. The design uses a joint power source (not shown in Figure 8) to drive the propellers on both drive units, and separate trim actuators 820, 830 to control the thrust elevation angles independently. A gear arrangement 830 is used to transfer drive torque from the power source that is arranged above the propulsion system inside the hull 110. The center member 710 is arranged rotatable about the z-axis.

The first drive unit 120a and the second drive unit 120b of the propulsion system 120, and possibly also any additional drive units comprised in the propulsion system, comprise respective trim actuators. Each trim actuator is arranged to control thrust elevation angle $\omega_{y,T}$ of its drive unit independently of the thrust elevation angle $\omega_{y,T}$ of the other drive unit, in response to a control signal from the control unit 130.

More generally, the control unit 130 in the systems disclosed herein is arranged to estimate a pitch motion $\omega_y$ and a roll motion $\omega_x$ of the hull 110 based on input from the motion sensor system 140, and suppress both pitch motion and roll motion by the hull 110 by controlling the thrust elevation angles $\omega_{y,T}$ and the thrust azimuth angles $\omega_{z,T}$ of the first and second drive units 120a, 120b.

This propulsion system can be seen as a development of the propulsion system described in US 9,068,855 B1, where a marine propulsion system arranged to mitigate porpoising was described. The principles and techniques described in US 9,068,855 B1 are applicable also here, except that now the control unit considers both pitch and roll motion mitigation, by adjusting trim separately at two or more drive units in the propulsion system of the vessel.

The trim actuators of the vessel may comprise hydraulic actuators. However, hydraulic actuators may not be able to provide sufficient actuator bandwidth for all operations disclosed herein. Improved performance may be obtained if the trim actuators comprise electric machines, such as servo motors, that can be operated at high bandwidth in response to control signals from the control unit 130.

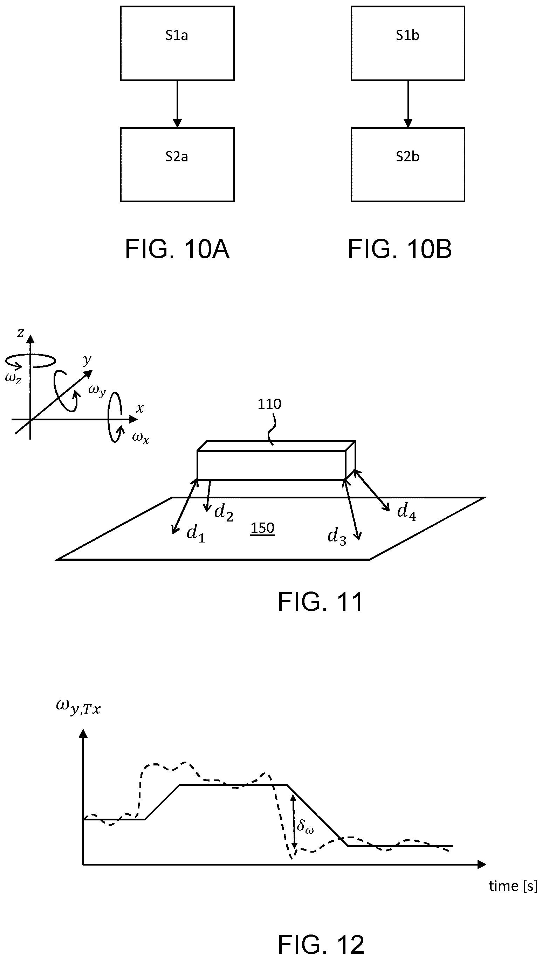

One or more of the drive units 120a, 120b may comprise a combination of hydraulic actuators and electric actuators. The electric actuator may then be arranged to provide fast trim adjustment over a limited trim angle range, while the hydraulically powered trim actuator may be slower, but arranged to provide trim over a larger trim angle range. The two actuators operating together can then provide fast adaptation of the trim angle over a large range of trim angles in response to control commands from the control unit 130 on the vessel. Figure 12 shows an example operation of this type of combined trim actuator system. The dashed line represents the total trim angle provided by the combination of electric machine trim actuator and hydraulic actuator. The solid line is the contribution to the trim angle by the hydraulic actuator and the difference $\delta$ there in-between is the contribution by the electric machine. Note that the electric machine responds faster to a control input by the control unit 130, and that the hydraulic machine acts as a base trim angle actuator which increases the trim angle range of the combined system.

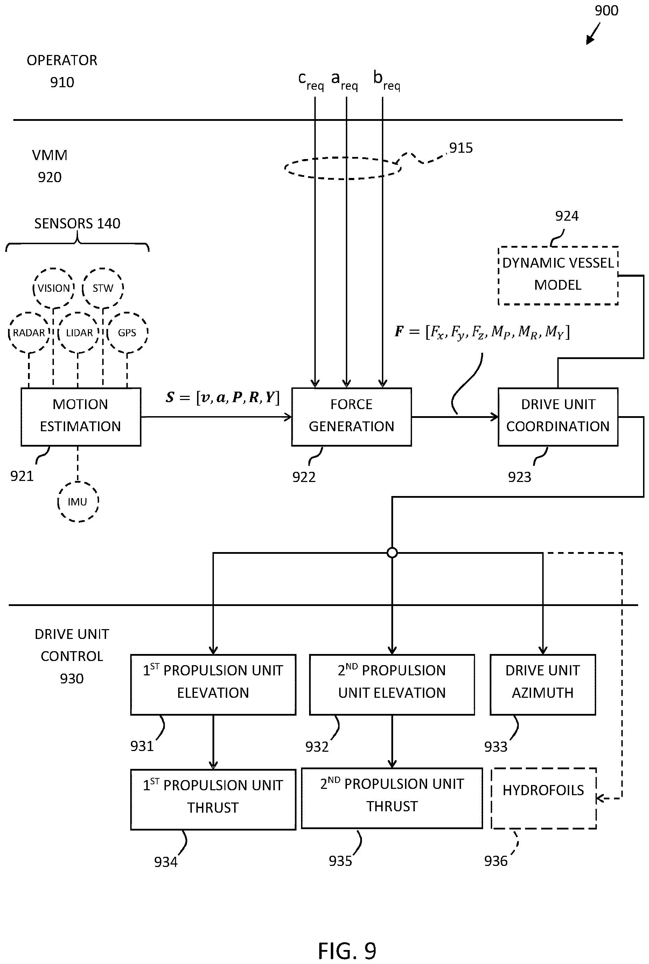

As discussed above in connection to Figure 1C, the control unit 130 can be arranged to suppress a roll motion by the hull 110 by controlling the thrust elevation angles $\omega_{y,T}$ of the drive units 120a, 120b in different directions to induce a counter roll motion R by the hull 110, and to suppress a pitch motion by the hull 110 by controlling the thrust elevation angles $\omega_{y,T}$ of the drive units 120a, 120b in the same direction to induce a counter pitch motion P by the hull 110. According to some preferred aspects the control unit implements a vessel motion management system where the different motion actuators on the vessel is coordinated in order to obtain a desired motion by the hull. An example of this type of vessel motion management system is illustrated in Figure 9.

Figure 9 illustrates an example control function architecture 900 for control of one or more drive units 120a, 120b according to the discussion herein. In this example architecture, the operator function 910 generates vessel motion requests 915, which may comprise a desired steering angle or an equivalent curvature $c_{req}$ to be followed by the vessel, and which may also comprise a desired vessel acceleration $a_{req}$ and also other types of vessel motion requests, which together describe a desired motion by the vessel along a desired path at a desired velocity profile along with one or more constraints, such as reduced roll motion, and/or reduced pitch motion by the vessel. The vessel motion requests 915 may also be an instruction to maintain the vessel position at some target location and/or facing in a given direction. The operator function 910 may also be configured to generate a behavior request $a_{req}$. This request may be indicative of a desired behavior by the vessel, such as if a reduced roll motion is desired, a reduced energy consumption, a reduced pitch or optimized trim angle, and so on. These parameters may be provided by an operator of the vessel, or by a passenger in the vessel.

It is understood that the motion requests can be used as base for determining or predicting a required amount of longitudinal and lateral forces to be generated by the drive unit, and also roll moments and pitch moments which needs to be generated by the vessel 100, 200, 500 in order to successfully complete a desired maneuver. The operator function 910 can of course also be replaced by manual input signals, from a steering wheel and thrust control, for example.

The vessel motion management (VMM) system 920 implemented by the control unit 130 performs vessel state and motion estimation, by a motion estimation function 921. In this manner the VMM system continuously determines a vessel state $S$ comprising, e.g., velocities v in three dimensions $[v_x, v_y, v_z]$, accelerations $a$ in three dimensions $[a_x, a_y, a_z]$, and also pitch $P$, roll $R$ and yaw motion $Y$, using various sensors comprised in the motion sensor system 140 arranged on the vessel, where at least one or more IMU sensors are preferred and preferably also one or more radar transceivers 170 directed at the sea surface 150. The pitch, roll and yaw motions of the vessel hull 110 may be determined as absolute angles and as time derivatives of the angles, i.e., as rates.

The result of the motion estimation 921, i.e., the estimated vessel state $S$ describing the current motion of the vessel and potentially also the predicted future motion of the vessel in response to a requested actuation by the drive unit or drive units is input to the master VMM force generation module 922 which determines the required global forces and moments $F$ for the different drive units on the vessel to cause the vessel 100, 200, 500 to move according to the requested acceleration and curvature profiles $a_{req}$, $c_{req}$, and to generally behave according to the desired motion request 915. The forces involved may be longitudinal forces $F_x$, lateral forces $F_y$, lifting or counter-lifting forces $F_z$, pitch moment $M_P$, roll moment $M_R$, and yaw moments $M_Y$. The determination of the global force vector may be achieved using look-up tables, using analytic functions (based on motion models and/or physical principles such as Newtons law), by on-line computer simulation, and/or using machine learning structures which have been trained off-line based on computer-implemented behavioral models of the vessel 100, 200, 500. The required global force vector $F$ is input to a drive unit coordination function 923 which allocates forces and coordinates the control degrees of freedom of the drive units on the vessel, i.e., sets the elevation angles and the azimuth angles of the different drive units, and also the propulsion thrust of each propulsion unit. The global force vector may comprise forces in three dimensions, i.e., longitudinal forces $F_x$, lateral forces $F_y$, and lifting or counter-lifting forces $F_z$, as well as pitch moment $M_P$, roll moment $M_R$, and yaw moments $M_Y$, i.e., $F = [F_x, F_y, F_z, M_P, M_R, M_Y]$.

The drive unit coordination function 923 may be based on a straightforward look-up table which maps required forces to drive unit settings, or on an analytic function which maps required forces to drive unit settings, or on an optimization routine which finds the optimal drive unit settings for generating a given set of required forces, e.g., based on an energy cost function or the like. The drive unit coordination function 923 may use a configured model of vessel dynamics 924 as part of the coordination. According to some aspects, the interface to the drive unit controller also comprises a return channel where the drive unit controllers can feedback capability information to the central controller, which enables the central VMM controller to impose constraints on the actuation at the different drive units. The aggregated drive unit coordination function outputs a control allocation for at least some of the drive units on the vessel. This allocation is received by drive unit controllers 930, which control the different parameters of the drive units, i.e., the elevation angles 931, 932, and the azimuth angle 933, along with the propulsion unit thrusts 934, 935.

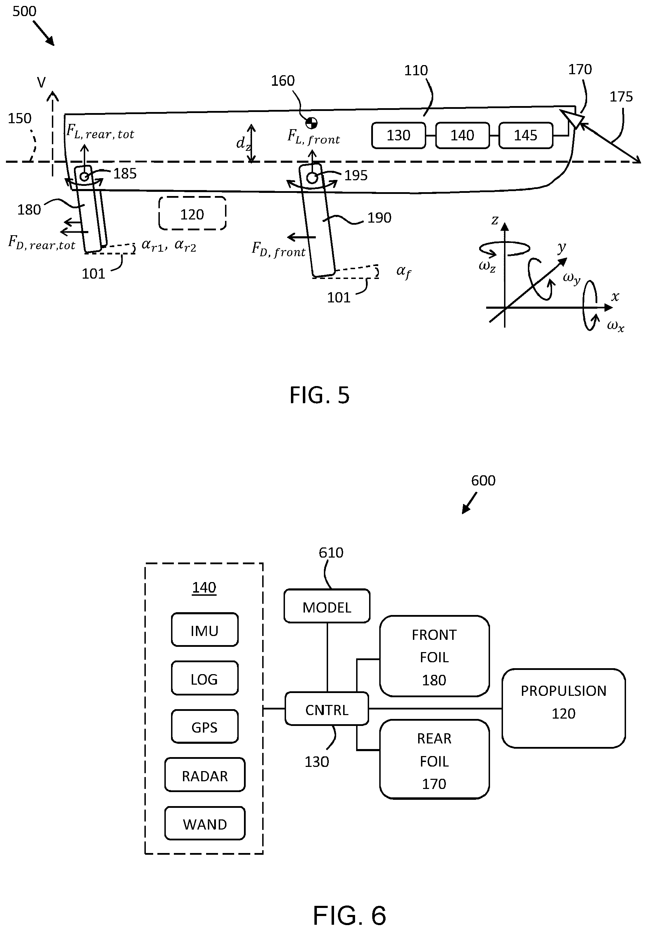

To summarize, Figure 9 illustrates a control architecture which can be used to control one or more drive units according to the present teaching, and possibly also a foiling arrangement as will be discussed in more detail below in connection to Figure 5. Control of a drive unit comprises configuration of thrust azimuth angle, thrust elevation angles, and also thrust power for each propulsion unit (if they are separately controllable as is the case if separate electric machines are used as power source). The system obtains a desired motion by the vessel, which may comprise an acceleration or speed through water, and also a desired steering. The desired motion may also be associated with a reduction in pitch motion and/or roll motion by the hull 110. The desired motion may also comprise aspects such as long term trim setting and so on. The system 900 then uses one or more sensor systems in the motion sensor system 140 (preferably comprising at least one IMU and/or one or more radar transceivers 170) to determine a current motion by the vessel, by a motion estimation function 921, which may also involve predicting a future motion by the vessel based on a current motion and on a current control input to the drive unit or drive units on the vessel. This motion estimate is used in a force generation module 922 which determines the required forces in order for the current motion by the vessel to be changed into a desired motion by the vessel. The forces involved may be longitudinal forces $F_x$, lateral forces $F_y$, lifting or counter-lifting forces $F_z$, pitch moment $M_P$, roll moment $M_R$, and yaw moments $M_Y$. The forces required to alter the behavior of the vessel to be more like the desired motion behavior 915 is then fed to a drive unit coordination module 923 which determines the drive unit settings that generate the required forces, e.g., by executing a computer-implemented optimization routine.

As explained above, the motion sensor system 140 preferably comprises an IMU arranged to measure rotation by the hull 110 about a longitudinal reference axis x and a lateral reference axis y. The IMU is preferably a 6-axis IMU which comprises a 3-axis accelerometer and a 3-axis gyroscope.

Figure 4 shows an example of a vessel control system 400 which uses a general motion sensor system 140 in combination with a control unit 130 to control a propulsion system 120 comprising port and starboard (SB) drive units 120a, 120b.

The vessel control system 400 may be configured to use an IMU as discussed above, and also other sensor types, such as one or more speed logs, one or more GPS receivers, and also a so-called foiling wand. A foiling wand is a mechanical device which is attached to the hull and towed in the water. As the hull 110 lifts out of the water during a foiling operation, the angle between the wand and the hull 110 increases. Thus, by measuring the angle between the foiling wand and the hull, the heave $d_z$ of the hull 110 can be determined at least approximately. US 10,829,181 B2 describes an example of a foiling wand.

The vessel control system 400 may also use a model 410 of the vessel dynamics, to predict a future motion behavior by the hull given current motion and forces acting on the hull. The model of vessel dynamics 410 can also be used to determine how a given set of forces acting on the hull 110 will influence the motion behavior of the hull 110. Several different models of vessel dynamics are known in the prior art, in particular in the literature related to marine vessel dynamics. Such models of motion will therefore not be discussed in more detail herein.

With reference to Figure 2 and to Figure 6, the motion sensor system 140 preferably also comprises at least one radar transceiver 170 arranged to transmit a radar signal 175 in a boresight direction pointing at the sea surface 150 at a non-zero angle relative to a normal V of the sea surface 150. A radar transceiver control unit 145 is arranged to determine at least speed of the hull 110 relative to the water surface 150 based on radar backscatter from the sea surface 150.

The radar transceiver 170 comprises an antenna which may be a single transmission lobe antenna or a more advanced antenna array capable of detecting an angle of incoming radar backscatter from the sea surface. The radar backscatter from the sea surface changes frequency as function of the speed of the vessel over the water surface, known as a Doppler shift effect, and the vessel speed over the sea surface can therefore be inferred from analysis of the radar backscatter. The radar backscatter can also be used to determine the heigh of the radar transceiver over the sea surface 150, as well as the Euler angle of the hull relative to the sea surface 150 in case the radar signal is processed jointly together with an output signal from an IMU.

The present disclosure proposes the use of radar to determine at least longitudinal and optionally also lateral velocity of a marine vessel with respect to the sea surface. With reference to Figure 3, a radar system of at least two transceivers 170a-b, or a radar transceiver comprising an antenna array, can be configured to determine a two-dimensional velocity vector $[v_x, v_y]$ of the vessel with respect to the sea surface 150.

The principle of determining speed over ground of a land vehicle is explained in US 2004/0138802, and it has been realized that the same technique can be used also to determine the speed of a marine vessel over a sea surface. The use of ground speed radar transceivers to determine the speed over ground of a vehicle is also described in, e.g., WO2023169652A1. Example mathematical operations for obtaining vessel pose and vessel speed based on the radar backscatter is described in these documents and will therefore not be discussed in more detail herein.

Each radar transceiver 170 illuminates a portion of the sea surface 150. Various illumination patterns can be selected, where a larger illuminated portion of the sea surface provides more averaging of waves and other distortions, but also reduces the angular resolution necessary to distinguish longitudinal motion from lateral motion by the vessel.

The radar transceiver 170 is arranged to transmit a radar signal over a radar bandwidth, where a larger bandwidth improves range resolution in a known manner. Velocity resolution depends on the radar wavelength and the repetition period of the waveform in a known manner. According to some aspects, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an FMCW radar signal format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. The Doppler frequency at the range corresponding to the distance between the radar transceiver and ground is indicative of the radial speed at which the ground moves relative to the radar transceiver, as explained in US 2004/0138802.

Figure 3 shows an example radar system where two radar transceivers 170a, 170b have been arranged at the bow and two radar transceivers 170c, 170d have been arranged at the stern of the vessel 200. Each radar transceiver measures velocity relative to the sea surface in the bore sight direction of the radar transceiver and/or a distance to the sea surface along the bore sight direction. In other words, according to some aspects, the marine vessel 200, 500 may comprise a plurality of radar transceivers 170a-d arranged to transmit respective radar signals in respective boresight directions pointing at the sea surface 150. One or more of the radar transceiver control units 145 can then be arranged to determine at least speed of the hull 110 relative to the water surface 150 based on radar backscatter from the sea surface 150.

The azimuth angles of the different radar transceivers 170a-d are denoted as $\alpha_1, \alpha_2, \beta_1, \beta_2$ in Figure 2.

One or more radar transceivers 170 can also be arranged to determine a distance from the radar transceiver

170 to the sea surface 150, as noted above, and the control unit 130 can then be arranged to estimate the pitch motion $\omega_y$ and/or the roll motion $\omega_x$ of the hull 110 based on the determined distance to the sea surface 150. Figure 11 illustrates an example of this operation, where $d_1$, $d_2$, $d_3$, $d_4$ are the distances from four example radar transceivers to the sea surface. A roll motion and/or a pitch motion by the hull 110, i.e., a change in pose by the hull relative to the sea surface 150, will give rise to changes in these distances. A predetermined mapping can be determined which maps the four distances to hull pose, such as a look-up table or a function derived using geometrical relations conditioned on the location of the radar transceivers on the hull 110 and their respective bore sight angles relative to the x, y, and z axes.

At least three radar transceivers can be used with the same or at least similar technical effect. More than four radar transceivers can also be used with the same or similar technical effect.

A radar transceiver 170 can furthermore be arranged to determine a distance from the radar transceiver 170 to the sea surface 150, and the control unit 130 can be arranged to estimate a heave $d_z$ of the hull 110 based on the determined distance to the sea surface 150. This heave can, for instance, be determined based on a known mounting geometry of the radar transceiver relative to the sea surface, i.e., at what angle relative to the sea surface the radar transceiver bore direction is configured. The heave $d_z$ of the hull 110 can then be determined using straight forward trigonometric identities.

By processing the output signals from the different radar transceivers, it is possible to determine velocity and acceleration by the hull 110 in the longitudinal direction and also in the lateral direction, and also in the vertical direction, using methods known in the art. In other words, using the radar system in Figure 2, or a similar radar transceiver system, it becomes possible to determine a three-dimensional velocity vector of the hull 110, i.e., a vector $\mathbf{v} = [v_x, v_y, v_z]$. It is also possible to estimate a three-dimensional acceleration vector of the hull 110, i.e., a vector $\alpha = [a_x, a_y, a_z]$.

Figure 13 illustrates an example where a radar transceiver 170e comprises an antenna array arranged to receive radar backscatter from a larger angular range 1300, and to detect radar backscatter from more than one direction. This more advanced radar configuration provides more information compared to a single-lobe antenna but is also more complex in terms of signal processing and hardware. The antenna array is configured to emit the radar signal in at least a first direction and in a second direction different from the first direction. The radar transceiver control unit 145 here comprises a processing device arranged to detect first and second radar signal components of the received radar signal based on their respective angles of arrival (AoA), where the first radar signal component has an AoA corresponding to the first direction and the second radar signal component has an AoA corresponding to the second direction. The control unit 130 is arranged to determine the two-dimensional velocity vector of the heavy-duty vehicle based on respective Doppler frequencies of the first and second radar signal components. This way the speed over ground of the vehicle can be determined in a reliable manner in two dimensions, e.g., in longitudinal and lateral directions, by a single radar signal. Compared to the radar systems discussed in US 2004/0138802, the present system uses a single radar transceiver to determine a two-dimensional velocity vector, instead of separate radar transceivers. This allows for a cost efficient system with small physical footprint.

If each radar transceiver 170, or at least a subset of the radar transceivers, output a distance to the sea surface 150 along the boresight direction, then it also becomes possible to determine a current pitch angle $\omega_y$ and a current roll angle $\omega_x$ of the vessel 200 using methods known in the art. This is because the pitch and roll angles of the vessel 200 are functions of the distances from the hull to the sea surface 150, given a heave $d_z$ of the hull 110. A change in pitch and/or roll will result in corresponding changes in the distances from the radar transceivers 170a-d to the sea surface. Note that the heave $d_z$ of the hull 110 can also be determined based on the measured distances from the radar transceivers 170a-d to the sea surface. It is also appreciated that the plurality of radar transceivers 170a-d can be arranged in other geometries with the same or similar technical effect. It is also appreciated that a smaller number of radar transceivers can be used or a larger number of radar transceivers. However, some ambiguity may result if too few radar transceivers are deployed, depending on what motion parameters that the radar transceivers are used to estimate.

According to some aspects, at least one of the radar transceiver control units 145 is arranged to determine a speed and/or acceleration of the hull 110 relative to the sea surface 150 based on one or more radar signals 175. An IMU can also be arranged to determine an acceleration of the hull 110 in an inertial reference frame, and the control unit 130 can be arranged to determine an Euler angle $\theta$ of the hull 150 based on the speed and/or acceleration of the hull 110 based on the speed and/or acceleration of the hull 110 relative to the sea surface 150 and on the acceleration of the hull 110 in the inertial reference frame.

It is appreciated that the sea surface 150 is not always perfectly planar, but often uneven to some degree due to waves and sometime also due to the effects of sea current. A sea surface in light wind conditions is normally more even than the sea surface in strong wind. Herein, when discussing the orientation of the sea surface 150 relative to the gravity vector or the Earth horizontal plane, it is assumed that the sea surface 150 coincides with a plane that intersects the water line of the marine vessel, at least approximately.

The gravity vector, as used herein, corresponds approximately to the perpendicular line of equipotential surface of gravity on Earth. It is understood that the Earth's equipotential surface of gravity is very complex, and the equipotential surface of reference ellipsoid model such as WGS-84, is used to approximate the Earth's equipotential surface of gravity.

The gravity of Earth, denoted herein by $g$, is the net acceleration that is imparted to objects due to the combined effect of gravitation (from mass distribution within Earth) and the centrifugal force (from the Earth's rotation). In SI units this acceleration is expressed in meters per second squared (m/s²) or equivalently in newtons per kilogram (N/kg). Near Earth's surface, the acceleration due to gravity, accurate to three significant figures, is 9.81 m/s². The gravity vector is approximately normal to the horizontal plane, at least in a local area.

The Inertial reference frame referred to herein is defined based on the gravity vector and the Earth coordinate system, where the xy-plane is parallel to the horizontal plane and where the z-axis is aligned with the gravity vector, i.e., pointing upwards. In most applications the yaw angle of the vessel in the Inertial reference plane is of little consequence, hence the rotation of the xy-plane in the Inertial reference frame is often taken to be the same as that in the vessel reference frame.

The orientation of the vessel, in particular the hull of the vessel, relative to the Inertial reference frame is defined by the Euler angles $\theta = [\theta_x\ \theta_y\ \theta_z]^T$. To transform variables from inertial coordinates to vessel coordinates three rotational operations must be applied, e.g., via three rotation matrices. Note that several definitions of Euler angles exist in the literature, depending on in which order the rotations are done, and hence the order of multiplication of the three matrices. Note that the product is non-commutative. The rotation matrices around the x, y and z axis are as follows:

$$T_x = \begin{bmatrix} 1 & 0 & 0 \\ 0 & \cos\theta_x & \sin\theta_x \\ 0 & -\sin\theta_x & \cos\theta_x \end{bmatrix}$$

$$T_y = \begin{bmatrix} \cos\theta_y & 0 & -\sin\theta_y \\ 0 & 1 & 0 \\ \sin\theta_y & 0 & \cos\theta_y \end{bmatrix}$$

$$T_z = \begin{bmatrix} \cos\theta_z & \sin\theta_z & 0 \\ -\sin\theta_z & \cos\theta_z & 0 \\ 0 & 0 & 1 \end{bmatrix}$$

The total transform from the Inertial reference frame to the vessel reference frame is:

$$T = T_x T_y T_z$$

Now, assume that an IMU system and a radar system are both configured to measure motion of the vessel. The radar measures motion of the vessel relative to the sea surface 150, while the IMU measures motion of the vessel relative to gravity, i.e., in the inertial reference frame.

The relation between acceleration $a_x$, $a_y$, $a_z$ in the vessel fixed frame as output from the IMU, and the Euler angles $\theta_x$, $\theta_y$ which indicate the orientation of the hull relative to the horizontal plane, is given by:

$$\boldsymbol{a} = \begin{bmatrix} a_x \\ a_y \\ a_z \end{bmatrix} = \begin{bmatrix} \dot{v}_x \\ \dot{v}_y \\ \dot{v}_z \end{bmatrix} + \begin{bmatrix} \omega_y v_z - \omega_z v_y \\ \omega_z v_x - \omega_x v_z \\ \omega_x v_y - \omega_y v_x \end{bmatrix} + g \cdot \begin{bmatrix} -\sin(\theta_y) \\ \sin(\theta_x)\cos(\theta_y) \\ \cos(\theta_x)\cos(\theta_y) \end{bmatrix}$$

where $\omega_x$, $\omega_y$, $\omega_z$ are angular vessel speeds, and $v_x$, $v_y$, $v_z$ translation vessel speeds measured in the vessel fixed frame. The gravity constant is denoted $g$.

The time derivative of translational speeds in the vessel frame is denoted $\dot{v}_x$, $\dot{v}_x$, $\dot{v}_x$. The radar system is measuring $v_x$, $v_y$, $v_z$ and $\dot{v}_x$, $\dot{v}_x$, $\dot{v}_x$ as discussed above. The IMU is measuring $a_x$, $a_y$, $a_z$ and $\omega_x$, $\omega_y$, $\omega_z$ as also discussed above.

The equation above for the IMU output can be rewritten as

$$\begin{bmatrix} -sin(\theta_y) \\ sin(\theta_x)\,cos(\theta_y) \\ cos(\theta_x)\,cos(\theta_y) \end{bmatrix} = \frac{1}{g} \cdot \left( \begin{bmatrix} a_x \\ a_y \\ a_z \end{bmatrix} - \begin{bmatrix} \dot{v}_x \\ \dot{v}_y \\ \dot{v}_z \end{bmatrix} - \begin{bmatrix} \omega_y v_z - \omega_z v_y \\ \omega_z v_x - \omega_x v_z \\ \omega_x v_y - \omega_y v_x \end{bmatrix} \right)$$

where the right side is known by inserting data from radar and/or from the IMU. Hence $\theta_x$ and $\theta_y$ can be determined by joint processing of the radar system output and the IMU system output on the vessel. Since there are two unknowns ($\theta_x$, $\theta_y$) and three equations, the equation system is underdetermined, and a least square solution can be found. If there is a fluctuation in uncertainty in the data, a weighted least square can be applied to prioritize the rows with the highest certainty.

As long as the Euler angles are small, an appropriate small angle solution can be applied, as

$$\begin{bmatrix} \theta_y \\ \theta_x \end{bmatrix} = \frac{1}{g} \cdot \left( \begin{bmatrix} -a_x \\ a_y \end{bmatrix} - \begin{bmatrix} -\dot{v}_x \\ \dot{v}_y \end{bmatrix} - \begin{bmatrix} -\omega_y v_z + \omega_z v_y \\ \omega_z v_x - \omega_x v_z \end{bmatrix} \right)$$

These Euler angles correspond to the pitch and roll angles of the vessel.

According to some aspects, with reference to Figure 5, the marine vessel 500 comprises a foiling system 180, 190, and the control unit 130 is arranged to suppress pitch motion and roll motion by the hull 110 by controlling the foiling system 180, 190 in combination with the thrust elevation angles $\omega_{y,T}$ and the thrust azimuth angles $\omega_{z,T}$ of the first and second drive units 120a, 120b.

The foiling system may for instance comprise a front hydrofoil arrangement 190 and a rear hydrofoil arrangement 180, and the control unit 130 can be arranged to control a heave $d_z$ of the hull 110 based on control of the front hydrofoil arrangement and to control pitch and/or roll of the hull 110 based on control of the rear hydrofoil arrangement. Figure 5 illustrates a marine vessel 500 that comprises a hull 110, a control unit 130, a hydrofoiling arrangement 180, 190, and a motion sensor system 140. In this particular example the front hydrofoiling arrangement 180, 190 comprises a single hydrofoil wing arranged pivotable about a front pivot point 195. The rear hydrofoiling arrangement according to the example in Figure 5 comprises left and right hydrofoil wings that can be controlled independently of each other to, e.g., generate yaw motion by the hull 110. The rear hydrofoiling arrangement 180 is arranged pivotable about a rear pivot point or points 185. Each hydrofoiling arrangement comprises at least one hydrofoiling wing supported by respective struts on the vessel hull 110. The configured angles of the example rear hydrofoiling wings relative to some reference plane such as the horizontal plane is denoted $\alpha_{r1}$ and $\alpha_{r2}$ in Figure 5. The configured angle of the example front hydrofoiling wing is denoted $\alpha_f$ in Figure 5.

The motion sensor system 140 comprises a radar transceiver control unit 145 and at least one radar transceiver 170 arranged to transmit a radar signal 175 in a boresight direction pointing at the sea surface 150 as discussed above, preferably but not necessarily at an angle relative to a normal V of the sea surface 150. The radar transceiver control unit 145 is arranged to determine at least a current heave $d_z$ of the hull 110 relative to the water surface 150 based on radar backscatter from the sea surface 150, and the control unit 130 is arranged to control the hydrofoiling arrangement 180, 190 to reduce a difference between the current heave $d_z$ of the hull 110 and a desired heave of the hull 110. The example vessel 500 in Figure 5 thus uses a radar 170 directed at the sea surface 150 to determine the height of the hull 110 above the sea surface. This allows accurate control of the hydrofoiling arrangement, such that a target heave can be maintained by the vessel during a hydrofoiling operation. In case the current heave $d_z$ of the hull 110 measured by the radar system becomes smaller or larger than the desired heave, a compensation by the hydrofoiling arrangement can be triggered to restore heave to the target heave set-point.

One or more drive units forming part of a propulsion system 120 of the vessel 500 is also present, although not explicitly shown in Figure 5. A hydrofoil wing can, for instance, be integrally formed with a propulsion system such as the propulsion system illustrated in Figures 7-8.

The lift force $F_L$ of a hydrofoiling arrangement and the drag force $F_D$ of a hydrofoiling arrangement both play a significant role in the hydrofoiling operation. The lift force $F_L$ is especially important as it enables the hydrofoil to achieve lift force, allowing the boat to "fly" above the water surface. When the boat gains enough lift force, the hull starts to rise above the water surface, and with the attached submerged wings, the system transitions into airplane dynamics, rather than traditional boat dynamics. These forces can be modeled using equations that describe the behavior of fluid dynamics, such as the well-known Navier-Stokes equations.

The lift force $F_L$ can be derived from Bernoulli's principle, as well as other factors such as the surface area $A$ of the wing, the density $\rho$ of the fluid around the wing and the velocity $v$ of the fluid as it moves over the wing. The lift force is generated by pressure differences in the fluid surrounding the wing, which creates an upward force that lifts the hydrofoil. In contrast, the drag force $F_D$ creates a resistance force in the moving direction of the wing's motion. The lift force and the drag force may be determined, at least approximately, as

$$F_L = \frac{C_L(\beta)v^2 A\rho}{2}$$

$$F_D = \frac{C_D(\beta)v^2 A\rho}{2}$$

where $v$ is the speed of the water as it moves over the wing, $A$ is the surface area of the wing, and $\rho$ is the density of the water. $C_L$ and $C_D$ are lift and drag coefficients, respectively, and they are functions of the attack angle $\beta$ of the wing. These coefficients depend on the angle of attack (AoA) $\beta$, generally in a non-linear manner. Understanding the lift and drag forces involved in the operation of a hydrofoil boat is important for developing an accurate control strategy. These relationships can be incorporated into the motion control performed by the control unit 130.

The generation of lift and drag forces depend on the angle of attack $\beta$, which is determined by two angles: the pitch angle of the hull and the hydrofoil's set angle $\alpha$. The angle of attack of a hydrofoil wing is the angle between the wing chord line and the general direction of oncoming fluid flow. The boat's orientation in relation to the reference plane (normally the horizontal plane) determines the pitch angle, and the set angle is determined by the actuator that rotates the strut attached to the hydrofoil, allowing for independent control of the AoA of each hydrofoil.

Figure 6 illustrates an example control system 600 for controlling a combined hydrofoiling and drive unit operation. The system 600 comprises a motion sensor system 140 which may comprise various motion sensors, such as one or more IMUs, one or more speed logs, one or more GPS receivers, one or more radar transceivers directed at the sea surface, and also one or more hydrofoiling wands that determine a current heave $d_z$ of the hull 110 using a trailing member that is towed in the water. The control system uses a model of vessel dynamics 610 to determine suitable control commands for obtaining a desired operation by the vessel. Particular advantages are obtained here since the hydrofoiling arrangement is controlled in combination with the propulsion system 120 in a coordinated manner, as discussed herein in connection to Figure 9.

It is appreciated that waves and other disturbances on the sea surface will have an impact on the heave $d_z$ of the hull 110 measured by a radar system. Some averaging may be required in order to mitigate effects of waves. More than one radar transceiver can also be arranged to concurrently measure heave, and an average can be determined over the measurements from the different radar transceivers.

According to some aspects, the foiling system comprises a front hydrofoil arrangement 190 and a rear hydrofoil arrangement 180, as illustrated in Figure 5, and the control unit 130 is arranged to control the heave $d_z$ of the hull 110 based on control of the front hydrofoil arrangement 190.

The control unit 130 is preferably also arranged to control pitch and/or roll of the hull 110 based on control of the rear hydrofoil arrangement 180. The rear hydrofoiling arrangement may comprise dual wings, that are independently controllable in elevation angle, which means that the control unit 130 can use them to induce a roll motion as well as a pitch motion by the vessel 500.

The at least one radar transceiver 170 is preferably arranged to transmit the radar signal 175 in a boresight direction pointing at the sea surface 150 at a non-zero angle relative to a normal V of the sea surface 150. The radar transceiver control unit 145 is then preferably arranged to determine a speed of the hull 110 relative to the water surface 150 based on radar backscatter from the sea surface 150, and to control the foiling arrangement 180, 190 based on the speed of the hull 110.

According to some aspects, the marine vessel 500 comprises a plurality of radar transceivers 170a-d arranged to transmit respective radar signals in respective boresight directions pointing at the sea surface 150. The radar transceiver control unit 145 is the preferably arranged to determine the speed of the hull 110 relative to the water surface 150 in at least two directions based on radar backscatter from the sea surface 150. The control unit 130 can also be arranged to estimate a pitch motion $\omega_y$ and/or a roll motion $\omega_x$ of the hull 110 based on the determined distance to the sea surface 150, as discussed above.

The control of the hydrofoil arrangements 180, 190 can be integrated into the control architecture 900 discussed above in connection to Figure 9, where the hydrofoil actuators 936 then form part of the drive unit control layer 930.

Figures 10A-B show flow charts that illustrate methods which summarize at least some of the discussions herein. Figure 10A illustrates a computer-implemented method, for stabilizing a marine vessel 100, 200, 500 comprising a hull 110, a propulsion system 120, a control unit 130 and a motion sensor system 140, where the propulsion system 120 comprises a first drive unit 120a and a second drive unit 120b separated by a longitudinal midship line 115 of the hull 110, where each drive unit 120a, 120b is arranged to generate thrust T in a controllable thrust elevation angle $\omega_{y,T}$ and in a controllable thrust azimuth angle $\omega_{z,T}$. The method comprises estimating S1a a pitch motion $\omega_y$ and a roll motion

$\omega_x$ of the hull 110 the control unit 130, based on input from the motion sensor system 140, and suppressing S2a pitch motion and roll motion by the hull 110 by separately controlling the thrust elevation angles $\omega_{y,T}$ and the thrust azimuth angles $\omega_{z,T}$ of the first and second drive units 120a, 120b.

Figure 10B illustrates a computer-implemented method, for controlling a foiling operation by a marine vessel 500, the marine vessel 500 comprising a hull 110, a control unit 130, a hydrofoiling arrangement 180, 190, and a motion sensor system 140, where the motion sensor system 140 comprises a radar transceiver control unit 145 and at least one radar transceiver 170 arranged to transmit a radar signal 175 in a boresight direction pointing at the sea surface 150. The method comprises determining S1b a current heave $d_z$ of the hull 110 relative to the water surface 150, by the radar transceiver control unit 145, based on radar backscatter from the sea surface 150, and controlling S2b the hydrofoiling arrangement 180, 190, by the control unit 130, to reduce a difference between the current heave $d_z$ of the hull 110 and a desired heave of the hull 110.

Figure 14 is a schematic diagram of a computer system 1400 for implementing examples disclosed herein. The computer system 1400 is adapted to execute instructions from a computer-readable medium to perform these and/or any of the functions or processing described herein. The computer system 1400 may be connected (e.g., networked) to other machines in a LAN, an intranet, an extranet, or the Internet. While only a single device is illustrated, the computer system 1400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1400 may comprise at least one computing device or electronic device capable of including firmware, hardware, and/or executing software instructions to implement the functionality described herein. The computer system 1400 may include processing circuitry 1402 (e.g., processing circuitry including one or more processor devices or control units), a memory 1404, and a system bus 1406. The computer system 1400 may include at least one computing device having the processing circuitry 1402. The system bus 1406 provides an interface for system components including, but not limited to, the memory 1404 and the processing circuitry 1402. The processing circuitry 1402 may include any number of hardware components for conducting data or signal processing or for executing computer code stored in memory 1404. The processing circuitry 1402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1402 may further include computer executable code that controls operation of the programmable device.

The system bus 1406 may be any of several types of bus structures that may further interconnect to a memory bus (with or without a memory controller), a peripheral bus, and/or a local bus using any of a variety of bus architectures. The memory 1404 may be one or more devices for storing data and/or computer code for completing or facilitating methods described herein. The memory 1404 may include database components, object code components, script components, or other types of information structure for supporting the various activities herein. Any distributed or local memory device may be utilized with the systems and methods of this description. The memory 1404 may be communicably connected to the processing circuitry 1402 (e.g., via a circuit or any other wired, wireless, or network connection) and may include computer code for executing one or more processes described herein. The memory 1404 may include non-volatile memory 1408 (e.g., read-only memory (ROM), erasable programmable read-only memory (EPROM), electrically erasable programmable read-only memory (EEPROM), etc.), and volatile memory 1410 (e.g., random-access memory (RAM)), or any other medium which can be used to carry or store desired program code in the form of machine-executable instructions or data structures, and which can be accessed by a computer or other machine with processing circuitry 1402. A basic input/output system (BIOS) 1412 may be stored in the non-volatile memory 1408 and can include the basic routines that help to transfer information between elements within the computer system 1400.

The computer system 1400 may further include or be coupled to a non-transitory computer-readable storage medium such as the storage device 1414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1414 and/or in the volatile memory 1410, which may include an operating system 1416 and/or one or more program modules 1418. All or a portion of the examples disclosed herein may be implemented as a computer program 1420 stored on a transitory or non-transitory computer-usable or computer-readable storage medium (e.g., single medium or multiple media), such as the storage device 1414, which includes complex programming instructions (e.g., complex computer-readable program code) to cause the processing circuitry 1402 to carry out actions described herein. Thus, the computer-readable program code of the computer program 1420 can comprise software instructions for implementing the functionality of the examples described herein when executed by the processing circuitry 1402. In some examples, the storage device 1414 may be a computer program product (e.g., readable storage medium) storing the computer program 1420 thereon, where at least a portion of a computer program 1420 may be loadable (e.g., into a processor) for implementing the functionality of the examples described herein when executed by the processing circuitry 1402. The processing circuitry 1402 may serve as a controller or control system for the computer system 1400 that is to implement the functionality described herein.

The computer system 1400 may include an input device interface 1422 configured to receive input and selections to be communicated to the computer system 1400 when executing instructions, such as from a keyboard, mouse, touch-sensitive surface, etc. Such input devices may be connected to the processing circuitry 1402 through the input device interface 1422 coupled to the system bus 1406 but can be connected through other interfaces, such as a parallel port, an Institute of Electrical and Electronic Engineers (IEEE) 1394 serial port, a Universal Serial Bus (USB) port, an IR interface, and the like. The computer system 1400 may include an output device interface 1424 configured to forward output, such as to a display, a video display unit (e.g., a liquid crystal display (LCD) or a cathode ray tube (CRT)). The computer system 1400 may include a communications interface 1426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**EP 4 403 457 A1**

**Claims**

1.  A marine vessel (100, 200, 500) comprising a hull (110), a propulsion system (120), a control unit (130) and a motion sensor system (140),

    where the propulsion system (120) comprises a first drive unit (120a) and a second drive unit (120b) separated by a longitudinal midship line (115) of the hull (110), where each drive unit (120a, 120b) is arranged to generate thrust ($T$) in a controllable thrust elevation angle ($\omega_{y,T}$) and in a controllable thrust azimuth angle ($\omega_{z,T}$), where at least the thrust elevation angles ($\omega_{y,T}$) are individually controllable by the control unit (130),
    where the control unit (130) is arranged to estimate a pitch motion ($\omega_y$) and a roll motion ($\omega_x$) of the hull (110) based on input from the motion sensor system (140), and
    where the control unit (130) is arranged to suppress pitch motion and roll motion by the hull (110) by controlling the thrust elevation angles ($\omega_{y,T}$) of the first and second drive units (120a, 120b).

2.  The marine vessel (100, 200, 500) according to claim 1, where the hull (110) has a center of gravity (160), where the pitch motion ($\omega_y$) and the roll motion ($\omega_x$) of the hull (110) is defined in relation to the center of gravity (160).

3.  The marine vessel (100, 200, 500) according to claim 1 or 2, where the first drive unit (120a) and the second drive unit (120b) are mounted on a transom (111) of the hull (110).

4.  The marine vessel (100, 200, 500) according to claim 1 or 2, where the first drive unit (120a) and the second drive unit (120b) are mounted on a bottom (112) of the hull (110).

5.  The marine vessel (100, 200, 500) according to any previous claim, where the first drive unit (120a) and the second drive unit (120b) comprise respective trim actuators, where each trim actuator is arranged to control thrust elevation angle ($\omega_{y,T}$) of its drive unit independently of the thrust elevation angle ($\omega_{y,T}$) of the other drive unit, in response to a control signal from the control unit (130).

6.  The marine vessel (100, 200, 500) according to claim 5, where the trim actuators comprise hydraulic actuators.

7.  The marine vessel (100, 200, 500) according to claim 5 or 6, where the trim actuators comprise electric machines.

8.  The marine vessel (100, 200, 500) according to any previous claim, where the control unit (130) is arranged to suppress a roll motion by the hull (110) by controlling the thrust elevation angles ($\omega_{y,T}$) of the drive units (120a, 120b) in different directions to induce a counter roll motion (R) by the hull (110).

9.  The marine vessel (100, 200, 500) according to any previous claim, where the control unit (130) is arranged to suppress a pitch motion by the hull (110) by controlling the thrust elevation angles ($\omega_{y,T}$) of the drive units (120a, 120b) in the same direction to induce a counter pitch motion (P) by the hull (110).

10. The marine vessel (100, 200, 500) according to any previous claim, where the motion sensor system (140) comprises an inertial measurement unit, IMU, arranged to measure rotation by the hull (110) about a longitudinal reference axis ($x$) and a lateral reference axis ($y$).

11. The marine vessel (200, 500) according to any previous claim, where the motion sensor system (140) comprises at least one radar transceiver (170) arranged to transmit a radar signal (175) in a boresight direction pointing at the sea surface (150) at a non-zero angle relative to a normal (V) of the sea surface (150), where a radar transceiver control unit (145) is arranged to determine at least speed of the hull (110) relative to the water surface (150) based on radar backscatter from the sea surface (150).

12. The marine vessel (200, 500) according to any previous claim, comprising a plurality of radar transceivers (170a-d) arranged to transmit respective radar signals in respective boresight directions pointing at the sea surface (150), where one or more radar transceiver control units (145) are arranged to determine at least speed of the hull (110) relative to the water surface (150) based on radar backscatter from the sea surface (150).

13. The marine vessel (200, 500) according to any previous claim, where a radar transceiver (170) is arranged to determine a distance from the radar transceiver (170) to the sea surface (150), where the control unit (130) is arranged to estimate the pitch motion ($\omega_y$) and/or the roll motion ($\omega_x$) of the hull (110) based on the determined

17

distance to the sea surface (150).

14. The marine vessel (200, 500) according to any previous claim, where a radar transceiver (170) is arranged to determine a distance from the radar transceiver (170) to the sea surface (150), where the control unit (130) is arranged to estimate a heave ($d_z$) of the hull (110) based on the determined distance to the sea surface (150).

15. The marine vessel (200, 500) according to any previous claim, where a radar transceiver control unit (145) is arranged to determine a speed and/or acceleration of the hull (110) relative to the sea surface (150) based on one or more radar signals (175), where an IMU is arranged to determine an acceleration of the hull (110) in an inertial reference frame, where the control unit (130) is arranged to determine an Euler angle ($\theta$) of the hull (150) based on the speed and/or acceleration of the hull (110) relative to the sea surface (150) and on the acceleration of the hull (110) in the inertial reference frame.

16. The marine vessel (500) according to any previous claim, comprising a foiling system (180, 190), where the control unit (130) is arranged to suppress pitch motion and roll motion by the hull (110) by controlling the foiling system (180, 190) in combination with the thrust elevation angles ($\omega_{y,T}$) and the thrust azimuth angles ($\omega_{z,T}$) of the first and second drive units (120a, 120b).

17. The marine vessel (500) according to claim 16, where the foiling system comprises a front hydrofoil arrangement (190) and a rear hydrofoil arrangement (180), where the control unit (130) is arranged to control a heave ($d_z$) of the hull (110) based on control of the front hydrofoil arrangement and to control pitch and/or roll of the hull (110) based on control of the rear hydrofoil arrangement.

18. A computer-implemented method, for stabilizing a marine vessel (100, 200, 500) comprising a hull (110), a propulsion system (120), a control unit (130) and a motion sensor system (140),

where the propulsion system (120) comprises a first drive unit (120a) and a second drive unit (120b) separated by a longitudinal midship line (115) of the hull (110), where each drive unit (120a, 120b) is arranged to generate thrust ($T$) in a controllable thrust elevation angle ($\omega_{y,T}$) and in a controllable thrust azimuth angle ($\omega_{z,T}$), the method comprising:

estimating (S1a) a pitch motion ($\omega_y$) and a roll motion ($\omega_x$) of the hull (110) the control unit (130), based on input from the motion sensor system (140), and
suppressing (S2a) pitch motion and roll motion by the hull (110) by separately controlling the thrust elevation angles ($\omega_{y,T}$) and the thrust azimuth angles ($\omega_{z,T}$) of the first and second drive units (120a, 120b).

19. A computer program product comprising program code for performing, when executed by processing circuitry of the control unit (130), the method of claim 18.

20. A non-transitory computer-readable storage medium comprising instructions, which when executed by the processing circuitry, cause the processing circuitry to perform the method of claim 18.

FIG. 1A

FIG. 1B

FIG. 1C

**FIG. 2**

**FIG. 3**

**FIG. 4**

FIG. 5

FIG. 6

FIG. 7

FIG. 8

900

OPERATOR
910

$c_{req}$  $a_{req}$  $b_{req}$

VMM
920

915

SENSORS 140

924

DYNAMIC VESSEL
MODEL

VISION    STW

RADAR    LIDAR    GPS

$F = [F_x, F_y, F_z, M_P, M_R, M_Y]$

MOTION
ESTIMATION

$S = [v, a, P, R, Y]$

FORCE
GENERATION

DRIVE UNIT
COORDINATION

921

922

923

IMU

DRIVE UNIT
CONTROL
930

1ST PROPULSION UNIT
ELEVATION

2ND PROPULSION
UNIT ELEVATION

DRIVE UNIT
AZIMUTH

931

932

933

1ST PROPULSION UNIT
THRUST

2ND PROPULSION UNIT
THRUST

HYDROFOILS

934

935

936

FIG. 9

FIG. 10A

FIG. 10B

FIG. 11

FIG. 12

FIG. 13

FIG. 14

Europäisches
Patentamt

European
Patent Office

Office européen
des brevets

# EUROPEAN SEARCH REPORT

**Application Number**

EP 24 15 2795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 109085 A1 (SICCONI MARCO [DE]) 17 October 2019 (2019-10-17) | 1-10, 18-20 | INV. B63B39/08 |
| Y | * abstract; claims 1,16; figures * <br> * paragraphs [0003], [0005], [0015] * <br> * paragraphs [0021] - [0025] * <br> * paragraphs [0034] - [0037] * <br> * paragraphs [0042], [0048], [0058], [0060] * <br> ----- | 11-17 | B63H5/125 B63H20/08 G01S13/60 |
| X | US 2010/030411 A1 (WILSON JIM [US] ET AL) 4 February 2010 (2010-02-04) <br> * abstract; claims 1-7,10,12; figures 4-7 * <br> * paragraphs [0032], [0053] * <br> ----- | 1,18-20 | |
| X | CN 115 384 743 A (GUANGDONG EPROPULSION TECH CO LTD) 25 November 2022 (2022-11-25) | 1,18-20 | |
| Y | * abstract; figures * <br> * see annexed English translation: p.6, 4th par., p.8, 3rd par, 4th par. and 6th par., p.9, 1st par. * <br> ----- | 16,17 | |
| | | | **TECHNICAL FIELDS SEARCHED (IPC)** |
| Y | US 2018/224868 A1 (LIM EDWARD [US]) 9 August 2018 (2018-08-09) <br> * paragraph [0056] * <br> ----- | 11,12,15 | B63B B63H G01S B63J |
| A | JP H08 48288 A (SUMITOMO HEAVY INDUSTRIES) 20 February 1996 (1996-02-20) <br> * abstract; figure 1 * <br> * paragraphs [0014], [0017], [0019] * <br> ----- | 11,12 | |
| A | US 2018/081054 A1 (RUDZINSKY JASON P [US] ET AL) 22 March 2018 (2018-03-22) <br> * abstract; figures 2,6 * <br> * paragraphs [0049] - [0051] * <br> ----- | 11,12 | |

-/--

The present search report has been drawn up for all claims

| Place of search | Date of completion of the search | Examiner |
|---|---|---|
| The Hague | 31 May 2024 | Buron, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 15 2795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2004/138802 A1 (KURAGAKI SATORU [JP] ET AL) 15 July 2004 (2004-07-15) <br> * abstract; figures 2,3,10,11 * <br> * paragraphs [0029] - [0042] * <br> * paragraphs [0052] - [0058] * <br> ----- | 11-13 | |
| Y | US 2020/398939 A1 (GRADOLPH CHRISTIAN [DE]) 24 December 2020 (2020-12-24) <br> * abstract * <br> * paragraph [0082] * <br> ----- | 13,14,17 | |
| A | DE 10 2018 112052 A1 (IFM ELECTRONIC GMBH [DE]) 21 November 2019 (2019-11-21) <br> * abstract; figures 4,5 * <br> * paragraphs [0013], [0016], [0029] * <br> ----- | 13,14,17 | |

TECHNICAL FIELDS
SEARCHED      (IPC)

The present search report has been drawn up for all claims

| Place of search | Date of completion of the search | Examiner |
|---|---|---|
| The Hague | 31 May 2024 | Buron, Emmanuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 2795

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | | Publication date |
|---|---|---|---|---|
| DE 102018109085 A1 | 17-10-2019 | NONE | | |
| US 2010030411 A1 | 04-02-2010 | NONE | | |
| CN 115384743 A | 25-11-2022 | NONE | | |
| US 2018224868 A1 | 09-08-2018 | US 2017001732 A1 | | 05-01-2017 |
| | | US 2017102713 A1 | | 13-04-2017 |
| | | US 2018224868 A1 | | 09-08-2018 |
| JP H0848288 A | 20-02-1996 | NONE | | |
| US 2018081054 A1 | 22-03-2018 | CN 109923436 A | | 21-06-2019 |
| | | CN 109963778 A | | 02-07-2019 |
| | | EP 3512768 A2 | | 24-07-2019 |
| | | EP 3513215 A2 | | 24-07-2019 |
| | | US 2018081028 A1 | | 22-03-2018 |
| | | US 2018081054 A1 | | 22-03-2018 |
| | | WO 2018125323 A2 | | 05-07-2018 |
| | | WO 2018125324 A2 | | 05-07-2018 |
| US 2004138802 A1 | 15-07-2004 | EP 1437276 A1 | | 14-07-2004 |
| | | JP 2004216954 A | | 05-08-2004 |
| | | US 2004138802 A1 | | 15-07-2004 |
| US 2020398939 A1 | 24-12-2020 | DE 112018004323 A5 | | 14-05-2020 |
| | | US 2020398939 A1 | | 24-12-2020 |
| | | WO 2019063749 A1 | | 04-04-2019 |
| DE 102018112052 A1 | 21-11-2019 | NONE | | |

EPO FORM P0459

For more details about this annex : see Official Journal of the European Patent Office, No. 12/82

**REFERENCES CITED IN THE DESCRIPTION**

**Patent documents cited in the description**

- US 9068855 B1
- US 10829181 B2
- US 20040138802 A
- WO 2023169652 A1